# EUROPEAN PATENT SPECIFICATION

(11) **EP 2 623 181 B1**
(45) Date of publication and mention of the grant of the patent: **13.04.2016**
(21) Application number: 12153899.5
(22) Date of filing: 03.02.2012
(51) Int. Cl.: B01D 53/56, B01D 53/79, F23J 15/00, B01F 3/02, B01F 5/06

(54) **Arrangement for injecting a reducing agent into a flue gas**
Anordnung zum Eindüsen eines Reduktionsmittels in ein Rauchgas
Agencement pour injecter un agent réducteur dans un gaz de fumée

(43) Date of publication of application: 07.08.2013
(73) Proprietor: ALSTOM Technology Ltd, 5400 Baden (CH)
(72) Inventor: Tabikh, Ali Mustapha, 352 53 VÄXJÖ (SE); Rafidi, Nabil Elias, 352 61 VÄXJÖ (SE)
(74) Representative: General Electric Technology GmbH

(56) References cited:
- EP-A1- 0 526 393
- EP-A1- 1 716 918
- WO-A1-98/19773
- WO-A1-2005/021144
- WO-A1-2011/062960
- WO-A1-2012/023025
- US-A1- 2002 150 526
- US-A1- 2003 003 029

## Description

### Field of the Invention

The present invention relates to an arrangement for supplying a reducing agent in gaseous form into a flue gas flowing through a duct and then flowing into a selective catalytic reduction reactor (SCR) arranged downstream of said arrangement.

### Background of the Invention

In the combustion of a fuel, such as coal, oil, natural gas, peat, waste, etc., in a combustion plant, such as a power plant or a waste incineration plant, a process gas is generated. For separating nitrogen oxides, usually denoted NOx, from such a process gas, often referred to as a flue gas, a method is frequently used, in which a reducing agent, usually ammonia or urea, is mixed with the flue gas. The flue gas, mixed with said ammonia or urea, is then passed through a catalyst to promote selective reaction of the reducing agent with the NOx to form nitrogen gas and water vapour. Usually the catalyst is installed in what is commonly called a Selective Catalytic Reduction reactor (SCR reactor). The mixing of the reducing agent and the flue gas is made in a system duct in a position upstream of the SCR reactor.

The reducing agent is supplied to the system duct by a plurality of nozzles arranged within the duct. To facilitate an even distribution of the concentration of NOx and reducing agent over the cross section of the duct, and thus also over the cross section of the SCR reactor, it is known to use mixing plates in the duct to cause a turbulent flow of flue gas.

However, in many systems, the concentration of NOx and reducing agent is not evenly distributed in the flue gas over a given cross section of the SCR reactor. This poses a problem since a stoichiometric ratio between the NOx and the reducing agent is essential for achieving a good reduction of the NOx content of the flue gas and a low slip of the reducing agent from the SCR reactor.

DE 3723618 C1 discloses a device for mixing together two gaseous fluids in a gas duct. One of the fluids is supplied by a number of nozzles arranged in a row along a mixing plate. The nozzles are arranged at an angle with regard to the mixing plate and the main direction of flow through the duct, whereby the supplied gas is injected into the turbulent flow downstream of the mixing plate.

EP 1 716 918 discloses a mixing device comprising a swirl plate (15 in Fig. 1). A nozzle 12 (see figure 1) is arranged perpendicular to the flow direction of the fluid 1 and feeds into an annular room. From this room the gas is sucked into the stream of o further gaseous fluid stream.

WO 2012/023025 discloses a gas cleaning system. The gas cleaning system comprises an ammonia injection grid (10) and, downstream thereof, a gas flow rectifier (30) for diverting and rectifying gas flow.

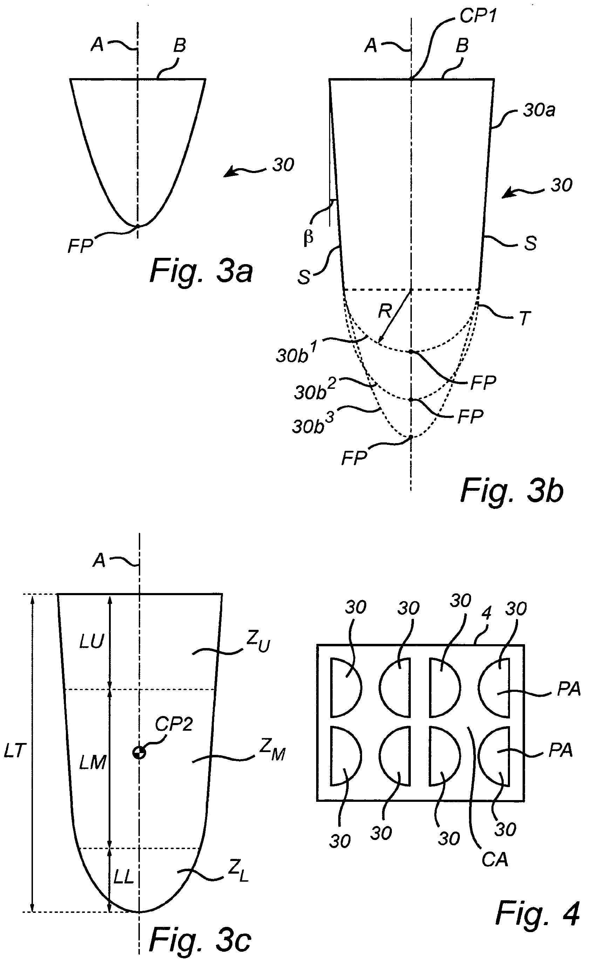

US 2002/150526 discloses multiple nozzles (32 in Fig. 3) and multiple deflector plates (34a, 34b, 34c in Fig. 3) positioned downstream to the nozzles. The deflector plates (34a, 34b, 34c in Fig. 3) are not arranged in the duct, but in a shell 31.

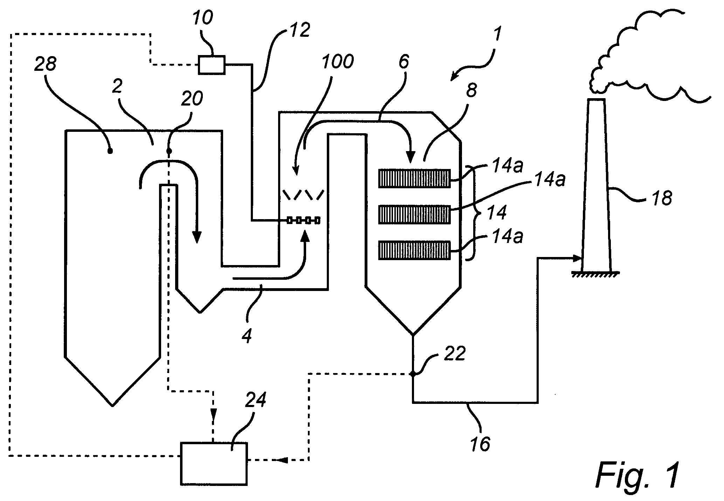

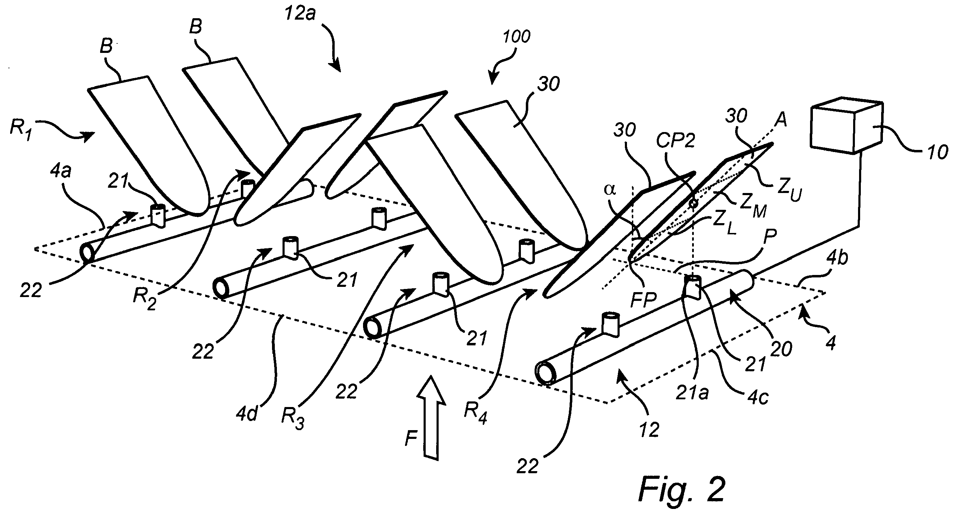

WO 2011/062960 discloses a system (10 in Fig. 1) for treating an exhaust gas stream of a combustion engine. A mixer (16 in Fig. 1) is arranged downstream from an additive injector (14 in Fig. 1). The system (10) may comprise one or more additive injectors, see [0043]. The mixer (16) comprises eight vanes (20 in Fig. 2).

US 2003/003029 discloses mixing of ammonia and flue gas upstream a SCR-system. Static mixer tabs (50) are arranged downstream an ammonia supply system (30) having sparger pipes (35).

WO 98/19773 discloses a method for reducing NOx from an exhaust gas. Mixing is suggested to establish a substantially uniform exhaust gas composition, by using spray nozzles to inject the liquid reactant.

EP 0 526 393 discloses mixer elements (30 in Fig. 1 a). Supply pipes (21 in Fig. 8a) are arranged such that ammonia is supplied downstream the mixer plates (30).

WO 2005/021144 discloses a mixing system (1) comprising a number of mixing plates (2) and injection nozzles (10,11) arranged upstream the mixer plates (2).

### Summary of the Invention

An object of the present invention is to provide a robust arrangement which allows a reduction in the number of nozzles supplying a reducing agent into a gas duct having a through flow of flue gas, and which allows an even distribution of said reducing agent into the flue gas upstream a SCR reactor.

This object is achieved by means of an arrangement for supplying a reducing agent in gaseous form into a flue gas flowing through a gas duct communicating with a catalyst in a selective catalytic reduction reactor (SCR) arranged downstream of said arrangement. Such arrangement comprises a plurality of nozzles arranged in the gas duct over a cross section of the gas duct perpendicular to the direction of gas flow through said gas duct, the nozzles being adapted to supply said reducing agent, a plurality of mixing plates arranged in the gas duct downstream of said nozzles, each mixing plate being adapted to cooperate with at least one dedicated nozzle, wherein each nozzle is arranged within a projected area of its dedicated mixing plate, the projected area is the area of a surface of the dedicated mixing plate as projected in a plane perpendicular to the gas flow direction of the gas duct.

By this arrangement, a relatively efficient and even intermixing of the supplied reducing agent and the flue gas containing NOx across the flue gas is achieved over a given cross section of the gas duct downstream of the arrangement. Furthermore, a robust arrangement with respect to varying operation conditions is achieved since the reducing agent is supplied in gaseous form upstream of its dedicated mixing plate and within the projected area. Supplying reducing agent in gaseous form in this manner also has the advantage that the structure of nozzles can be kept very simple, thereby enabling a relatively cost-efficient arrangement. Further, supplying reducing agent in gaseous form allows the reducing agent to be released into the passing stream of flue gas in a very smooth manner, thereby minimizing pressure drops in the gas duct.
Each mixing plate generates vortices emerging from a leading edge thereof. The vortices rotate in opposite directions and their diameters gradually increase after leaving the mixing plate. The vortices thus formed along the mixing plate leading edge rotate in opposite directions toward the longitudinal center axis of the mixing plate, with a gradually increasing diameter as the vortices' distance from the mixing plate increases downstream thereof.

By this arrangement, reducing agent is supplied toward the major extended surface of each mixing plate. By supplying reducing agent in this manner, the reducing agent is mainly intermixed into and throughout the flue gas by means of turbulence caused by the vortices generated at the opposing lateral edge portions of each mixing plate. Once transferred to the rear major extended surface of the mixing plate, the reducing agent contacts the already turbulent flow of only the flue gas formed at the leading edge, and intermixes therewith.

The turbulent flow generated by each mixing plate within the arrangement have proven to result in very efficient intermixing and distribution of the reducing agent and NOx within the flue gas over the a cross section of the gas duct. Since the arrangement is adapted to be positioned upstream of a SCR reactor, intermixing continues until the flue gas reaches the SCR reactor and the catalysts arranged therein. The concentration of NOx in the flue gas has, by the inventive arrangement, proven to have a surprisingly even distribution over the cross sectional area of the SCR reactor.

Trials have been conducted indicating the surprisingly beneficial effect of the subject arrangement. More than one hundred nozzles supplying a reducing agent in a system without any mixing plates is effectively replaced with an arrangement according to the subject arrangement comprising only a few nozzles, each having a dedicated mixing plate.

According to the invention, the plurality of nozzles is arranged in a pattern comprising at least two symmetrically arranged rows over a cross section of the gas duct, each row comprising at least one nozzle, and wherein the straight edge portions of the mixing plates are arranged in parallel with said rows. The surface planes of the plurality of mixing plates are thus aligned with the nozzles.

According to one embodiment, all mixing plates in each row are of essentially the same angle with respect to their dedicated nozzles. Such an arrangement allows for relatively easy mounting installation of the mixing plates in the gas duct. According to one embodiment, the mixing plates in a first row arranged next to a first wall of the gas duct are directed with their straight edges closest to said wall, and wherein the mixing plates in a second row, adjacent the first row are directed with their straight edges closest to a second wall of the gas duct, the second wall being opposite the first wall.

Using such a symmetrical pattern over a cross section of the gas duct, an even distribution of reducing agent and NOx across the full cross section of the gas duct has been noted.

According to one embodiment, the arrangement comprises an even number of rows, wherein the mixing plates are arranged along the rows in a repetitive pattern, in which the mixing plates in a first row are arranged in close proximity to a first wall of the gas duct with straight edges closest to said wall, the straight edges of the mixing plates in a second row, adjacent the first row are positioned closest to the straight edges of the mixing plates in a subsequent third row, and the straight edges of the mixing plates in a fourth row, adjacent the third row, are positioned in close proximity to a second wall of the gas duct, the second wall being opposite the first wall.

Such a symmetrical arrangement over a cross section of the gas duct, creates a relatively even distribution of reducing agent and NOx across the cross section. It is to be understood that the number of nozzles and mixing plates required depends on the size of the cross section of the gas duct. Trials have been made indicating that arrangements according to the subject invention, equipped with a few nozzles arranged in four rows, each nozzle having a dedicated mixing plate, is as effective as more than 100 nozzles used without mixing plates.

According to one embodiment, each nozzle is arranged in a position located a distance from a focus point of its dedicated mixing plate, the distance, taken perpendicular to the gas flow direction of the gas duct, is a factor of 0.2 to 0.7 times a projected length of its dedicated mixing plate, the projected length is the projection of the length of the mixing plate starting at a focus point and ending at a trailing edge of the dedicated mixing plate as projected perpendicular to the gas flow direction of the gas duct.

By this arrangement, reducing agent is supplied toward a mid zone of the major extended surface of each mixing plate. The placement position within the duct and the size of the mid zone depends indeed on the geometry of the mixing plate and the angle of the mixing plate with respect to the placement of the nozzle within the duct. It should be understood that the flow of reducing agent must not be directed to the mathematical center, but rather over an area covering such center represented by said mid zone.

Accordingly, supplied reducing agent is thereby sucked into the two vortices generated along the opposing lateral edges of the mixing plates. The reducing agent is transferred toward the rear major surface of the mixing plate for efficient intermixing with flue gas already turbulently flowing as a result of the vortices generated by the mixing plate. Such further enhances and improves the intermixing of reducing agent and NOx within and throughout the flue gas.

According to the invention, each mixing plate has a shape representing a generally parabolic geometry.

According to one embodiment, the focus point of the parabolic geometry of each mixing plate is arranged essentially in the same plane as its dedicated nozzle.

According to one embodiment, each mixing plate is arranged with its major extended surface forming an angle of 25-55 degrees with respect to the gas flow direction of the gas duct. As such, the major extended surfaces of the thus angled mixing plates taken together represent a total projected area of the mixing plates corresponding to 30-50 %, more preferred 35-45 % and most preferred 38-42 % of the cross sectional area of the gas duct, the projected area of a mixing plate is the area of a surface of the mixing plate as projected in a plane perpendicular to the gas flow direction of the gas duct.

Tests have indicated that by arranging the mixing plates at such an angle with respect to its dedicated nozzle, the turbulence within the cross section area is sufficiently large to cause an even distribution of the reducing agent and NOx over the full cross section of the gas duct downstream the arrangement. Still, no undue restriction of the flow through the gas duct has been noted.

According to one embodiment, each mixing plate is arranged with its major extended surface forming an angle of 25-55 degrees, more preferred 27-50 degrees and most preferred 28-45 degrees with respect to the gas flow direction of the gas duct.

Dividing the mixing plate into three virtual zones, i.e., a lower zone, a mid zone and an upper zone, the lower zone represents a length corresponding to about 20%, the mid zone corresponding to about 50% and the upper zone represents a length corresponding to about 30% of the total length of the mixing plate taken along its longitudinal geometrical axis. As such, test results indicate that mixing plate positioning at an angle within the stated ranges results in lowest pressure on the rear major extended surface of the mixing plate, within the mid zone of the mixing plate. Thereby the supplied reducing agent was efficiently intermixed with the NOx of the flue gas by the turbulence generated by the lateral opposing edges of the so angled mixing plate.

According to one embodiment, the reducing agent is ammonia or urea supplied in dry, gaseous form. Thereby the risk of formation of deposits on the nozzles, the mixing plates or the walls of the gas duct is eliminated.

According to one embodiment, the mixing plate has a mathematic parabolic shape, or is a combined geometry composed of a truncated, acute isosceles triangle, merged along its truncated edge with a single-curved geometry. Said single-curved geometry is a segment of a circle, a segment of an ellipse or a parabolic segment. Such further enhances and improves the intermixing of reducing agent and NOx within and throughout the flue gas.

Further objects and features of the present invention will be apparent from the following detailed description and claims.

### Brief description of the drawings

The invention will now be described in more detail with reference to the appended drawings in which:
Fig. 1 is a schematic side cross sectional view of a coal fired power plant.
Fig. 2 is a perspective view of an arrangement according to one embodiment.
Fig. 3a is a plan view of a mixing plate embodiment.
Fig. 3b is a plan view of a mixing plate embodiment.
Fig. 3c is a plan view of a mixing plate embodiment
Fig. 4 is a top view of an arrangement according to one embodiment.
Fig. 5 is a perspective view of a portion of an arrangement according to one embodiment.
Fig. 6 is a schematic side cross sectional view of an arrangement according to one embodiment.

### Description of preferred embodiments

Fig. 1 is a schematic side cross sectional view illustrating a power plant 1. The power plant 1 comprises a coal fired boiler 2. In the coal fired boiler 2, coal is combusted in the presence of air, thereby generating a flow of a process gas in the form of a flue gas that leaves the coal fired boiler 2 via a fluidly connected duct 4. Through duct 4, flue gas flows to an inlet 6 of a selective catalytic reduction (SCR) reactor 8. An ammonia supply system 10 is operative for supplying ammonia to an ammonia-injection system 12. The ammonia injection system 12 supplies gaseous ammonia, NH3, to the flue gas flow in duct 4 upstream of the SCR reactor 8. The SCR reactor 8 comprises one or more consecutive layers 14 of SCR-catalyst 14a arranged inside the SCR reactor 8. The SCR catalyst 14a can by way of example comprise a catalytically active component, such as vanadium pentoxide or wolfram trioxide, applied to a ceramic carrier material so as to comprise, e.g., a honeycomb structure or a plate structure. In the SCR reactor 8 the nitrogen oxides, NOx, in the flue gas react with the ammonia injected by means of the ammonia injection system 12 to form nitrogen gas, N2. The flue gas then leaves the SCR-reactor 8 via a fluidly connected duct 16 and is emitted into the atmosphere via a fluidly connected stack 18. It will be appreciated that the power plant 1 may comprise further gas cleaning devices, such as particulate removers, such as electrostatic precipitators, and such as wet scrubbers. For reasons of maintaining clarity of illustration in the drawings, such devices are not shown in Fig. 1.

Now turning to Figure 2, a three dimensional schematic perspective cross sectional view of the gas duct 4 is illustrated. For clarity and to facilitate understanding, the four longitudinal duct walls, 4a, 4b, 4c and 4d, are illustrated highly schematically with broken lines. A cross section taken horizontally through gas duct 4, is from a position located between the boiler 2 and the SCR reactor 8. Fig. 2 illustrates one embodiment of the ammonia injection system 12 and static mixer 12a arrangement 100 according to the invention, for supplying a reducing agent in gaseous form into a flue gas flowing in the gas duct 4.

The arrangement 100 comprises a pipeline system 20 comprising a number of nozzles 21. In the illustrated embodiment, the pipeline system 20 is arranged across gas duct 4 perpendicular to the direction of flue gas flow, which is indicated by arrow F in Fig. 2. The arrangement 100 comprises nozzles 21 distributed in rows 22. It is to be understood that the number of nozzles 21 and rows 22 and their pattern may be varied.

The number of nozzles 21 should be adapted to parameters such as the quality of the flue gas, the size of the gas duct 4 and the quality of the SCR reactor 8.

The pipeline system 20 communicates with a supply 10 of reducing agent. The supply 10 can be in the form of a tank or another suitable container.

The arrangement 100 is suitable for using a reducing agent in a dry gaseous form. As nonlimiting examples, the reducing agent can be ammonia or urea. In case of ammonia, it can either be delivered to the power plant 1 site in gaseous form, or be delivered in liquid form for later vaporization before introduction into the gas duct 4. In gaseous form, no problems associated with the formation of deposits due to any droplets or condensation interacting with particles in the flue gas are experienced.

The reducing agent is supplied by the nozzles 21 arranged in the pipe system 20. The gaseous reducing agent is released into the passing stream of flue gas for intermixing with the same before reaching the mixing plates 30 arranged downstream of the nozzles.

By use of a reducing agent in gaseous form, the structure of nozzles 21 can be kept very simple. In its simplest form, the individual nozzle 21 is formed by an opening in the pipeline system 20. The gaseous reducing agent may thus be released into the passing stream of flue gas for intermixing in a very smooth manner.

The nozzles 21 are preferably oriented to correspond with and operate in the flow direction F of the flue gas flow through the gas duct 4. Further, each nozzle 21 is positioned aligned with its respective dedicated mixing plate 30 as described in more detail below.

Each nozzle 21 is preferably operated to provide a continuous flow of reducing agent into the gas duct 4.

The pipeline system 20 has been disclosed thus far as a single unitary system. However, it is to be understood that the pipeline system 20 can be divided into several systems allowing different parts of the cross section of the gas duct 4 to be provided with different amounts of reducing agent or with different degrees of pressurization. The latter can be useful if it has been detected by measurements made downstream of the SCR reactor that there is an in-homogenous NOx profile.

Each nozzle 21 is dedicated to a mixing plate 30. The mixing plate 30 is arranged downstream of its dedicated nozzle 21. The number of mixing plates may correspond to the number of nozzles, each mixing plate being adapted to cooperate with a dedicated nozzle. It is however understood that each mixing plate may have more than one dedicated nozzle 21.

Each mixing plate 30 has a geometry representing a generally parabolic geometry. This means that the mixing plate 30 can have a mathematically parabolic shape, see Figure 3a, or be a "combined geometry" having a generally overall parabolic geometry, see Figure 3b.

A "combined geometry" is defined herein as meaning a modified, acute isosceles triangle 30a modified by the replacement of one apex with a single-curved geometry 30b. The single-curved geometry can be represented by a segment of a circle 30b1, a segment of an ellipse 30b2 or a parabolic segment 30b3. The apex angle β of said triangle 30a forming part of the combined geometry is preferably 5-15 degrees. It is preferred that the single-curved geometry 30b1, 20b2, 30b3 is given such radius R that its tangent T merges smoothly with the sides S of triangle 30a. The three single curved geometries 30b1, 30b2, 30b3 are disclosed with broken lines in Figure 3b.

No matter which design 30b1, 30b2, 30b3 of the mixing plate 30, the mixing plate 30 should have a symmetric geometry along its longitudinal geometrical axis A. This axis A is defined as a line extending perpendicularly from a center point CP1 on the base B of triangle 30a, to the focus point FP on the curved edge portion 30b1, 30b2, 30b3. The focus point FP is thus the center-most point along the curved leading edge portion 30b1, 30b2, 30b3 of the mixing plate 30. As seen along the longitudinal geometrical axis A, the mixing plate 30 can be divided into three virtual zones, see Figure 3c, a lower zone ZL, a mid zone ZM and an upper zone ZU. The lower zone ZL, represents a length LL corresponding to about 20% of the length LT of the mixing plate 30 along the longitudinal geometrical axis A. The mid zone ZM represents a length LM corresponding to about 50% of the length LT of the mixing plate 30 along the longitudinal geometrical axis A. The upper zone ZU represents a length LU corresponding to about 30% of the length LT of the mixing plate 30 along the longitudinal geometrical axis A.

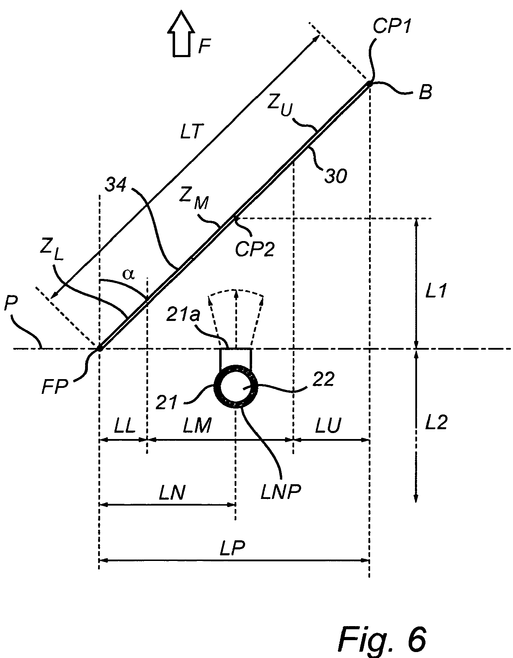

Now turning to Figure 6, the focus point FP of each mixing plate 30 is arranged essentially in the same horizontal plane P as its dedicated nozzle 21. Further, the mixing plate 30 is positioned in this horizontal plane P in such manner that the focus point FP is offset a distance LN from the mouth 21 a of the nozzle 21 in a direction perpendicular to the length of row 22 within gas duct 4, as illustrated in Fig. 6. The nozzle 21 is thus arranged in a position LNP located a distance LN from the focus point FP of its dedicated mixing plate 30. The distance LN, taken perpendicular to the gas flow direction F of the gas duct 4, is a factor of 0.2 to 0.7 times the projected length LP of its dedicated mixing plate 30. The projected length LP is the projection of the length LT of the mixing plate 30 starting at a focus point FP and ending at a trailing edge B of the dedicated mixing plate 30 as projected perpendicular to the gas flow direction F of the gas duct 4. The distance LN may thus be calculated as a factor of 0.5 times the projected length LP. By way of example, in case the projected length LP corresponds to a distance of one meter the distance LN is then 0.5 m.

The focus point FP of each mixing plate 30 is thus arranged essentially in the same horizontal plane P as its dedicated nozzle 21. It is however understood that the nozzle 21 may be arranged closer or farther away from its dedicated mixing plate 30, i.e. closer or farther away from the mixing plate than the location of the nozzle 21 shown in Fig. 6. The nozzle 21 may be arranged in a position which is within a range of 0 to 0.9 of the closest distance L1 to its dedicated mixing plate 30. Alternatively, the nozzle 21 may be arranged at a distance L2 upstream of the horizontal plane P. Then, the distance L2 between the nozzle 21 and the horizontal plane P measured along the main flow direction F of the gas duct is preferably less than 3 m.

Mixing plate 30 is offset from mouth 21 a to such extent that the nozzle 21 is positioned upstream of the virtual mid zone ZM and essentially coinciding with the longitudinal geometrical axis A of the mixing plate. Further, it is preferred that the offset is made to such extent that the mouth 21 a of the nozzle 21 is oriented to be aligned with a center point CP2 of said virtual mid zone ZM along the longitudinal geometrical axis A.

Further, each mixing plate 30 is arranged with its major expanded surface 34 forming an angle α with respect to its dedicated nozzle 21 in the flow direction F through said gas duct 4. This angle α can be fixed or adjustable. During normal operation, there is however no need to adjust the angle α. As illustrated in Fig. 2, each mixing plate 30 in each row R1, R2, R3, R4 have essentially the same angle α with respect to its dedicated nozzle 21. It is preferred that all mixing plates 30 in the arrangement 100 are arranged with one and the same angle α.

Trials have shown that a suitable angle α is from 25 to 55 degrees, more preferred from 27 to 50 degrees and most preferred from 28 to 45 degrees. Over the full cross section of the gas duct 4, trials have shown that it is preferred that the plurality of thus angled mixing plates 30 taken together should represent a total projected area of 30-50 %, more preferred 35-45 % and most preferred 38-42 % of the cross sectional area CA of the gas duct 4. A "projected area" PA, which also may be referred to as a "blocking area", is defined herein as meaning the area of a surface of a mixing plate 30 as projected in a plane perpendicular to the gas flow direction F of the gas duct 4. The total projected area is thus the sum of all projected areas of the individual mixing plates as seen in a plane perpendicular to the gas flow direction of the gas duct 4. This is schematically illustrated in Figure 4 representing a cross-section of the duct 4 having a total cross-section area CA with eight mixing plates 30, each mixing plate 30 having a projected area PA. Such an arrangement 100 has proven to provide a sufficient turbulence of the flue gas and reducing agent downstream of the mixing plates 30 in order to provide a sufficient intermixing of the reducing agent and NOx in the flue gas before the mixture reaches the SCR reactor arranged downstream thereof.

Further, as seen in Figure 2, the nozzles 21 are arranged in a pattern comprising four, symmetrically arranged rows 22. Each row 22 comprises two symmetrically arranged nozzles 21. It should be understood that this is only to exemplify the arrangement 100. The number of rows 22 should be at least two and each row 22 should have at least one nozzle 21. Thus, the number of nozzles 21 and mixing plates 30 can be reduced or increased.

From Figure 2, it is also illustrated that the straight edge base B of the mixing plates 30 are arranged perpendicular to the flow of flue gas through gas duct 4, essentially parallel with the rows 22.

In the subject embodiment, the arrangement 100 comprises four rows 22 of nozzles 21, i.e, an even number. The mixing plates 30 are arranged in a repetitive pattern. The mixing plates 30 in the first row R1 arranged next to the first wall 4a of the gas duct 4 are positioned with their straight edge base B in closest proximity to first wall 4a. The straight edge base B of the mixing plates 30 in the second, subsequent row R2 are positioned as a mirror image of those in first row R1 with straight edge bases B of the mixing plates 30 in closest proximity to the straight edge bases B of the mixing plates 30 in the next subsequent third row R3. Finally, the straight edge bases B of the mixing plates 30 in the fourth row R4, adjacent the third row R3 , are positioned as a mirror image of those in third row R3 with straight edge bases B of the mixing plates 30 in closest proximity with second wall 4c of the gas duct 4. The second wall 4c is arranged opposite the first wall 4a.

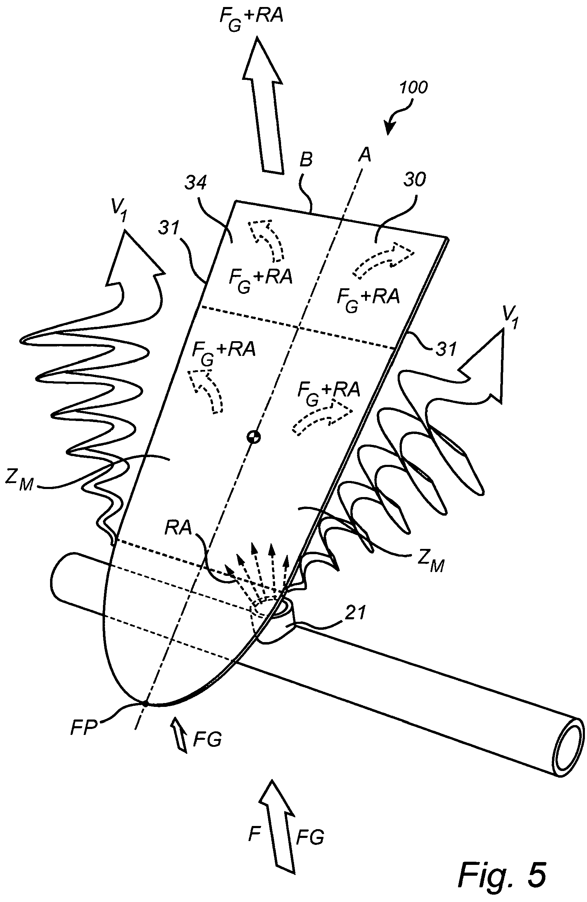

This pattern is applicable no matter the size of the gas duct 4. It should be understood that the number of rows 22 and the number of nozzles 21 in each row 22 can be different than that disclosed by example herein. Now referring to Figure 5, the function of the arrangement 100 will be schematically illustrated in order to describe the flue gas flow in and around a nozzle 21 and its dedicated mixing plate 30.

Starting upstream of the nozzle 21, a stream of flue gas flows inside the gas duct 4 from the boiler 2 toward the SCR reactor 8 thereby passing the arrangement 100.

Flue gas stream F, flowing through the illustrated cross section of the gas duct 4, around nozzle 21 and its dedicated mixing plate 30 is subjected to the flow disturbance caused by the mixing plate 30, thus generating a intermixing of the reducing agent with the flue gas containing NOx. While the subject arrangement 100 comprises several nozzles 21 and the mixing plates 30 dedicated thereto, for purposes of simplicity of explanation, the following description will focus on one nozzle 21 and its dedicated mixing plate 30.

Upon flue gas contact with mixing plate 30, vortices V1 are formed along the two opposing lateral edges 31 of the mixing plate 30. Vortices V1 are formed essentially along the full length of the two edges 31 and may even start to form at the curved geometry of the mixing plate, but are strongest along the two opposing mid zones ZM. The generally parabolic geometry of the mixing plate 30 thus generates at least two major leading edge vortices V1 emerging from the lateral opposing edges 31 of the mixing plate 30. The vortices V1 moves toward the straight edge base B of the mixing plate 30 along expanded surface 34. The vortices V1 gradually tend to follow the general flow direction F through the gas duct 4 away from the mixing plate 30, while gradually increasing in diameter as their distance from the mixing plate 30 increases. The vortices V1 rotate in opposite directions. The actual characteristics of the vortices V1 is a function of factors such as the angle α of the mixing plate 30 with respect to the flow direction F of the flue gas FG and the actual geometry of the mixing plate 30.

Adjacent to the focus point FP the flue gas stream contacts mixing plate 30 just before mixing with reducing agent, since the focus point FP of the mixing plate 30 is arranged in essentially the same horizontal plane as the nozzle 21.

The vortices V1 thus created adjacent the focus point FP essentially contains flue gas FG only until the vortices V1 meets another part of the stream of flue gas, which when passing nozzle 21 makes contact with the flow of emitted reducing agent RA, creating an intermixing thereof. Further downstream of the nozzle 21, such flue gas and reducing agent contact the angled mixing plate 30.

With reducing agent RA supplied in the area of mid zone ZM of the major expanded surface 34 of the mixing plate 30, the reducing agent RA is mainly intermixed into the flue gas FG by means of turbulence generated by the mixing plate 30. After flowing past the mid zone ZM of the mixing plate 30, the reducing agent contacts the already turbulent flow of the flue gas from the vortices V1 and intermixes therewith. Accordingly, supplied reducing agent is thereby sucked into the two vortices V1 generated along the two opposing lateral edges 31 of each mixing plate 30.

Gas duct 4 equipped with an arrangement 100 comprising at least two nozzles 21 with dedicated mixing plates 30, the turbulence generated by one set of a nozzle 21 and its dedicated mixing plate 30, add to the turbulence generated by adjacent sets 21, 30, no matter if the sets 21, 30 are positioned in one and the same row 22 or in adjacent rows 22 over the cross section of the gas duct 4.

Use of arrangement 100 as described results in a very efficient intermixing and distribution of the reducing agent with the NOx in the flue gas FG over a cross section of gas duct 4. Since the arrangement 100 is positioned upstream of the SCR reactor 8, intermixing continues until the flue gas FG reaches the SCR reactor 8 and the SCR-catalyst 8a arranged therein. The concentration of the NOx in the flue gas has, using arrangement 100 as described, proven surprisingly even distribution over a cross sectional area of the SCR reactor 8.

Test results indicate the surprisingly beneficial effect of the use of arrangement 100 as described. With such use, more than 100 nozzles supplying a reducing agent in a gas duct without any mixing plates could be replaced with an arrangement 100 as described comprising only a few nozzles 21, each having a dedicated mixing plate 30.

Arrangement 100 may be connected with a control system (not shown) to regulate the level of supply of reducing agent to gas duct 4 based on the amount of NOx in the flue gas downstream of the SCR reactor 8. Such control system may control reducing agent flow through nozzles 21 individually or may control the level of reducing agent supplied by pipe system 22 supporting a number of nozzles 21.

In its simplest form illustrated in Figure 1, a first NOx analyzer 20 is operative for measuring the amount of NOx in the flue gas of gas duct 4 just after the boiler 2 and upstream of the SCR reactor 8. A second NOx analyzer 22 is operative for measuring the amount of NOx in the flue gas of gas duct 16 downstream of the SCR reactor 8. A controller 24 receives data input from the first NOx analyzer 20 and the second NOx analyzer 22. Based on that data input, the controller 24 calculates a present NOx removal efficiency. The calculated present NOx removal efficiency is compared to a NOx removal set point. Based on the result of the comparison, the amount of reducing agent supplied to the flue gas is adjusted for optimal efficiency.

It is to be understood that when a control system is used, the described embodiment herein is only one possible solution. Depending on the number of sensors used downstream of the SCR reactor 8, it is possible to control the cleaning efficiency of the SCR reactor 8 at different points over its cross section.

It is also to be understood that a load sensor 28 operative for sensing the load on the boiler 2 may be used. Such load could be expressed in terms of, for example, the amount of fuel, such as ton/h of coal transported to the boiler 2. The data signal from such load sensor is useful to further control the amount of reducing agent supplied to the arrangement 100. According to one embodiment, flue gas NOx profile data is generated on a regular basis, based on NOx measurements performed upstream and/or downstream of the SCR-catalyst 14a. An advantage of this embodiment is that changes in the NOx profile, such changes being caused by, for example, a change in the load on the boiler 2, a change in the fuel quality, a change in the status of the burners of the boiler 2, etc., can be accounted for in the control of the amount of the reducing agent supplied to arrangement 100, such that efficient NOx removal can be ensured at all times.

It is also to be understood that the NOx profile data could be obtained by making manual measurements, to determine a suitable amount of reducing agent is supplied by arrangement 100 to the flue gas in gas duct 4.

It has been described hereinbefore, that the present invention can be utilized for cleaning a process flue gas generated in a coal fired boiler. It will be appreciated that the invention is useful also for other types of process gases, including process gases generated in oil fired boilers, incineration plants, including waste incineration plants, cement kilns, blast furnaces and other metallurgical plants including sinter belts, etc.

Further, it is to be understood that that the gas duct 4 can be provided with additional nozzles 21 not being dedicated to a specific mixing plate.

However, such extra nozzles 21 should be regarded as an optional feature if the gas cleaning should require an extra supply of reducing agent. Such extra nozzles 21 can be arranged at any suitable position in the gas duct 4, no matter if it is downstream or upstream of the arrangement 100.

Likewise, it is to be understood that the gas duct 4 can be provided with additional mixing plates 30 of any geometry, downstream or upstream of the arrangement 100 to further increase the turbulence and the intermixing of reducing agent with the flue gas.

It will be appreciated that numerous variants of the above described embodiments of the present invention are possible within the scope of the appended claims.

To summarize, the present disclosure relates to an arrangement for supplying a reducing agent in gaseous form into a flue gas flowing in a gas duct 4 communicating with a catalyst in a selective catalytic reduction reactor (SCR) arranged downstream said arrangement. The arrangement comprises a plurality of nozzles 21 arranged in the gas duct 4. The nozzles 21 are adapted to supply said reducing agent. The arrangement further comprises a plurality of mixing plates 30 arranged in the gas duct 4 downstream of said nozzles 21. Each mixing plate 30 is adapted to cooperate with at least one dedicated nozzle 21. Further, each nozzle 21 is arranged within a projected area of its dedicated mixing plate 30, the projected area is the area of a surface of the dedicated mixing plate 30 as projected in a plane perpendicular to the gas flow direction F of the gas duct 4.

## Claims

1. An arrangement for supplying a reducing agent in gaseous form into a flue gas flowing in a gas duct (4) communicating with a catalyst (14a) in a selective catalytic reduction reactor (SCR) (8) arranged downstream of said arrangement, the arrangement comprising
a plurality of nozzles (21) arranged in the gas duct (4) adapted to supply said reducing agent,
a plurality of mixing plates (30) arranged in the gas duct (4) downstream of said nozzles (21), each mixing plate (30) positioned with one dedicated nozzle (21) wherein
each nozzle (21) is arranged within a projected area (PA) of its dedicated mixing plate (30), the projected area (PA) is the area of a surface of the dedicated mixing plate (30) as projected in a plane perpendicular to the gas flow direction (F) of the gas duct (4), which is parallel to a longitudinal axis of the gas duct (4), wherein the plurality of nozzles (21) are arranged in a pattern comprising at least two symmetrically arranged rows (22) over a cross section of the gas duct (4), each row (22) comprising at least one nozzle (21), and a straight edge (B) of the dedicated mixing plates (30) is parallel with said rows (22), **characterized in that** each mixing plate (30) has a parabolic geometry.

2. The arrangement according to claim 1, wherein each nozzle (21) is arranged in a position (LNP) located a distance (LN) from a focus point (FP) of its dedicated mixing plate (30), the distance (LN), taken perpendicular to the gas flow direction (F) of the gas duct (4), is a factor of 0.2 to 0.7 times a projected length (LP) of its dedicated mixing plate (30), the projected length (LP) is the projection of the length (LT) of the mixing plate (30) starting at a focus point (FP) and ending at a trailing edge (B) of the dedicated mixing plate (30) as projected perpendicular to the gas flow direction (F) of the gas duct (4).

3. The arrangement according to any of the preceding claims, wherein a tip (FP) of each mixing plate (30) is positioned in the same plane as its at least one dedicated nozzle (21).

4. The arrangement according to claim 1, wherein each mixing plate (30) in each row (R₁, R₂, R₃, R₄) have a like angle with respect to their dedicated nozzles (21).

5. The arrangement according to claim 4, wherein the mixing plates (30) in a first row (R₁) closest to a first wall (4a) of said gas duct (4) are directed with their straight edges (B) closest to said wall (4a), and wherein the mixing plates (30) in a second row (R₂), adjacent the first row (R₁) are directed with their straight edges (B) closest to a second wall (4c) of said gas duct (4), said second wall (4c) being opposite the first wall (4a).

6. The arrangement according to claim 4, comprising an even number of rows, wherein the mixing plates (30) are arranged along the rows in a repetitive pattern, in which the mixing plates (30) in a first row (R₁) are arranged in proximity to a first wall (4a) of said gas duct (4) with straight edges (B) closest to said wall, the straight edges (B) of the mixing plates (30) in a second row (R₂), adjacent the first row (R₁) are positioned closest to the straight edges (B) of the mixing plates (30) in a subsequent third row (R₃), and the straight edges (B) of the mixing plates (30) in a fourth row (R₄), adjacent the third row (R₃), are positioned in proximity to a second wall (4c) of the gas duct (4), said second wall (4c) being opposite the first wall (4a).

7. The arrangement according to any of the preceding claims wherein each mixing plate (30) is arranged with its extended surface (34) forming an angle of 25-55 degrees with respect to the gas flow direction (F), wherein the surfaces (34) of the thus angled mixing plates (30) together represent a total projected area (PA) of 30-50 %, more preferred 35-45 % and most preferred 38-42 % of the cross sectional area (CA) of the gas duct (4), the projected area (PA) of a mixing plate (30) is the area of a surface of the mixing plate (30) as projected in a plane perpendicular to the gas flow direction (F) of the gas duct (4).

8. The arrangement according to any of the preceding claims, wherein each mixing plate (30) is arranged with its extended surface (34) forming an angle of 25-55 degrees, more preferred 27-50 degrees and most preferred 28-45 degrees with respect to the gas flow direction (F) through said gas duct (4).

9. The arrangement according to any of the preceding claims wherein the reducing agent (RA) is ammonia or urea supplied in gaseous form.

10. The arrangement according to any of the preceding claims, wherein the mixing plate (30) has a mathematic parabolic shape or is a combined geometry composed of a truncated, acute isosceles triangle (30a), merged along its truncated edge (S) with a single-curved geometry, said single-curved geometry being a segment of a circle (30b¹), a segment of an ellipse (30b²) or a parabolic segment (30b³).

## Patentansprüche

1. Anordnung zum Zuführen eines Reduktionsmittels in gasförmiger Form in ein Rauchgas in einem Gaskanal (4), der mit einem Katalysator (14a) in einem selektiven katalytischen Reduktionsreaktor (SCR) (8) kommuniziert, der stromabwärts der Vorrichtung angeordnet ist, wobei die Anordnung umfasst:
eine Vielzahl von Düsen (21), die im Gaskanal (4) angeordnet sind und zum Zuführen des Reduktionsmittels ausgelegt sind,
eine Vielzahl von Mischplatten (30), die im Gaskanal (4) stromabwärts der Düsen (21) angeordnet sind, wobei jede Mischplatte (30) mit einer zugeordneten Düse (21) angeordnet ist, wobei
jede Düse (21) innerhalb einer Projektionsfläche (PA) ihrer zugeordneten Mischplatte (30) angeordnet ist, wobei die Projektionsfläche (PA) die Fläche einer Oberfläche der zugeordneten Mischplatte (30) ist, die in einer Ebene senkrecht zur Gasströmungsrichtung (F) des Gaskanals (4) projiziert wird, die parallel zu einer Längsachse des Gaskanals (4) verläuft, wobei die Vielzahl von Düsen (21) in einem Muster angeordnet sind, das mindestens zwei symmetrisch angeordnete Reihen (22) über einen Querschnitt des Gaskanals (4) umfasst, wobei jede Reihe (22) mindestens eine Düse (21) umfasst und eine gerade Kante (B) der zugeordneten Mischplatten (30) parallel zu den Reihen (22) verläuft, **dadurch gekennzeichnet, dass** jede Mischplatte (30) eine parabolische Geometrie aufweist.

2. Anordnung nach Anspruch 1, wobei jede Düse (21) in einer Position (LNP) angeordnet ist, die von einem Fokuspunkt (FP) der zugeordneten Mischplatte (30) in einem Abstand (LN) angeordnet ist, wobei der Abstand (LN) senkrecht zur Gasströmungsrichtung (F) des Gaskanals (4) genommen wird und ein Faktor des 0,2- bis 0,7-fachen einer projizierten Länge (LP) der zugeordneten Mischplatte (30) ist, wobei die projizierte Länge (LP) die Projektion der Länge (LT) der Mischplatte (30) ist, die an einem Fokuspunkt (FP) startet und an einer Abströmkante (B) der zugeordneten Mischplatte (30) endet, die senkrecht zur Gasströmungsrichtung (F) des Gaskanals (4) projiziert wird.

3. Anordnung nach einem der vorhergehenden Ansprüche, wobei eine Spitze (FP) jeder Mischplatte (30) in der gleichen Ebene wie mindestens eine zugeordnete Düse (21) positioniert ist.

4. Anordnung nach Anspruch 1, wobei jede Mischplatte (30) in jeder Reihe (R₁, R₂, R₃, R₄) einen ähnlichen Winkel betreffend ihre zugeordneten Düsen (21) aufweist.

5. Anordnung nach Anspruch 4, wobei die Mischplatte (30) in einer ersten Reihe (R₁), die einer ersten Wand (4a) des Gaskanals (4) mit ihren geraden Kanten (B) am nächsten zu der Wand (4a) gerichtet sind, und wobei die Mischplatten (30) in einer zweiten Reihe (R₂) benachbart zu der ersten Reihe (R₁) mit ihren geraden Kanten (B) am nächsten zu einer zweiten Wand (4c) des Gaskanals (4) gerichtet sind, wobei die zweite Wand (4c) gegenüber der ersten Wand (4a) liegt.

6. Anordnung nach Anspruch 4, umfassend eine gerade Anzahl von Reihen, wobei die Mischplatten (30) entlang der Reihen in einem sich wiederholenden Muster angeordnet sind, wobei die Mischplatten (30) in einer ersten Reihe (R₁) in der Nähe einer ersten Wand (4a) des Gaskanals (4) mit den geraden Kanten (B) am nächsten zu der Wand angeordnet sind, die geraden Kanten (B) der Mischplatten (30) in einer zweiten Reihe (R₂) benachbart zu der ersten Reihe (R₁) am nächsten von den geraden Kanten (B) der Mischplatten (30) in einer nachfolgenden dritten Reihe (R₃) angeordnet sind und die geraden Kanten (B) der Mischplatten (30) in einer vierten Reihe (R₄) benachbart zu der dritten Reihe (R₃) in der Nähe einer zweiten Wand (4c) des Gaskanals (4) angeordnet sind, wobei die zweite Wand (4c) der ersten Wand (4a) gegenüberliegt.

7. Anordnung nach einem der vorhergehenden Ansprüche, wobei jede Mischplatte (30) mit ihrer erweiterten Oberfläche (34) angeordnet ist, die einen Winkel von 25 bis 55 Grad in Bezug auf die Gasströmungsrichtung (F) bildet, wobei die Oberflächen (34) der so abgeschrägten Mischplatten (30) zusammen eine Projektionsfläche (PA) von insgesamt 30 bis 50 % repräsentieren, bevorzugter von 35 bis 45 % und am meisten bevorzugt von 38 bis 42 % des Querschnittsbereichs (CA) des Gaskanals (4), wobei die Projektionsfläche (PA) einer Mischplatte (30) die Fläche einer Oberfläche der Mischplatte (30), die in einer Ebene senkrecht zur Gasströmungsrichtung (F) des Gaskanals (4) projiziert wird, ist.

8. Anordnung nach einem der vorhergehenden Ansprüche, wobei jede Mischplatte (30) mit ihrer erweiterten Oberfläche (34) angeordnet ist, die einen Winkel von 25 bis 55 Grad, mehr bevorzugt von 27 bis 50 Grad und am meisten bevorzugt von 28 bis 45 Grad in Bezug auf die Gasströmungsrichtung (F) durch den Gaskanal (4) bildet.

9. Anordnung nach einem der vorhergehenden Ansprüche, wobei das Reduktionsmittel (RA) Ammoniak oder Harnstoff ist, die in gasförmiger Form zugeführt werden.

10. Anordnung nach einem der vorhergehenden Ansprüche, wobei die Mischplatte (30) eine mathematische Parabelform oder eine kombinierte Geometrie aufweist, die aus einem kegelstumpfförmigen, spitzwinkeligen gleichschenkligen Dreieck (30a) besteht, und entlang seiner stumpfen Kante (S) zu einer konstant gekrümmten Geometrie übergeht, wobei die konstant gekrümmte Geometrie ein Segment eines Kreises (30b¹), ein Segment einer Ellipse (30b²) oder ein parabolisches Segment (30b³) ist.

## Revendications

1. Ensemble destiné à délivrer un agent réducteur sous forme gazeuse dans les gaz d'échappement s'écoulant dans un conduit (4) de gaz qui communique avec un catalyseur (14a) d'un réacteur (SCR) de réduction catalytique sélective (8) agencé en aval dudit ensemble, l'ensemble comprenant :
plusieurs ajutages (21) agencés dans le conduit (4) de gaz et adaptés pour délivrer ledit agent réducteur,
plusieurs plaques de mélange (30) agencées dans le conduit (4) de gaz en aval desdits ajutages (21), chaque plaque de mélange (30) étant disposée avec un ajutage (21) dédié,
chaque ajutage (21) étant agencé à l'intérieur de la surface projetée (PA) de sa plaque de mélange (30) dédiée, la surface projetée (PA) étant la surface de la plaque (30) de mélange dédiée projetée dans un plan perpendiculaire à la direction (F) d'écoulement des gaz du conduit (4) de gaz, parallèle à l'axe longitudinal du conduit (4) de gaz,
les différents ajutages (21) étant agencés selon un motif comprenant au moins deux rangées (22) agencées symétriquement sur la section transversale du conduit (4) de gaz,
chaque rangée (22) comprenant au moins un ajutage (21), le bord rectiligne (B) des plaques de mélange (30) dédiées étant parallèle auxdites rangées (22), **caractérisé en ce que**
chaque plaque de mélange (30) présente une géométrie parabolique.

2. Ensemble selon la revendication 1, dans lequel chaque ajutage (21) est agencé dans une position (LNP) située à une distance (LN) d'un point focal (FP) de sa plaque de mélange (30) dédiée, la distance (LN) prise dans la direction perpendiculaire à la direction (F) d'écoulement de gaz dans le conduit (4) de gaz étant de 0,2 à 0,7 fois la longueur projetée (LP) de sa plaque de mélange (30) dédiée, la longueur projetée (LP) étant la projection de la longueur (LT) de la plaque de mélange (30) en partant d'un point focal (FP) et en se terminant sur un bord de fuite (B) de la plaque de mélange (30) dédiée projetée perpendiculairement à la direction (F) d'écoulement de gaz dans le conduit (4) de gaz.

3. Ensemble selon l'une quelconque des revendications précédentes, dans lequel le sommet (FP) de chaque plaque de mélange (30) est placé dans le même plan que son ou ses ajutages (21) dédiés.

4. Ensemble selon la revendication 1, dans lequel chaque plaque de mélange (30) de chaque rangée (R₁, R₂, R₃, R₄) présente un même angle par rapport à son ajutage dédié (21).

5. Ensemble selon la revendication 4, dans lequel les plaques de mélange (30) de la première rangée (R₁) la plus proche d'une première paroi (4a) dudit conduit (4) de gaz sont agencées avec leur bord rectiligne (B) le plus proche de ladite paroi (4a) et dans lequel les plaques de mélange (30) de la deuxième rangée (R₂) adjacente à la première rangée (R₁) sont orientées avec leur bord rectiligne (B) le plus proche d'une deuxième paroi (4c) dudit conduit (4) de gaz, la deuxième paroi (4c) étant située face à la première paroi (4a).

6. Ensemble selon la revendication 4, comprenant un nombre pair de rangées, les plaques de mélange (30) étant agencées le long des rangées selon un motif répété dans lequel les plaques de mélange (30) d'une première rangée (R₁) sont agencées à proximité d'une première paroi (4a) dudit conduit (4) de gaz avec les bords rectilignes (B) les plus proches de ladite paroi, les bords rectilignes (B) des plaques de mélange (30) d'une deuxième rangée (R₂) adjacente à la première rangée (R₁) étant le plus près des bords rectilignes (B) des plaques de mélange (30) d'une troisième rangées (R₃) suivante, les bords rectilignes (B) des plaques de mélange (30) d'une quatrième rangée (R₄) adjacente à la troisième rangée (R₃) étant disposés à proximité d'une deuxième paroi (4c) du conduit (4) de gaz, ladite deuxième paroi (4c) étant située face à la première paroi (4a).

7. Ensemble selon l'une quelconque des revendications précédentes, dans lequel chaque plaque de mélange (30) est agencée avec sa grande surface (34) à un angle de 25 à 55 degrés par rapport à la direction (F) d'écoulement de gaz, les surfaces (34) des plaques de mélange (30) ainsi obliques représentant ensemble une surface projetée totale (PA) de 30 à 50 %, de manière plus préférable de 35 à 45 % et de la façon la plus préférable de 38 à 42 % de la superficie (CA) de la section transversale du conduit (4) de gaz, la surface projetée (PA) d'une plaque de mélange (30) étant la projection de la surface de la plaque de mélange (30) sur un plan perpendiculaire à la direction (F) d'écoulement de gaz dans le conduit (4) de gaz.

8. Ensemble selon l'une quelconque des revendications précédentes, dans lequel chaque plaque de mélange (30) est agencée avec sa grande surface (34) à un angle de 25 à 55 degrés, de façon plus préférable de 27 à 50 degrés et de la façon la plus préférable de 28 à 45 degrés par rapport à la direction (F) d'écoulement de gaz dans ledit conduit (4) de gaz.

9. Ensemble selon l'une quelconque des revendications précédentes, dans lequel l'agent réducteur (RA) est de l'ammoniac ou de l'urée délivrés sous forme gazeuse.

10. Ensemble selon l'une quelconque des revendications précédentes, dans lequel la plaque de mélange (30) présente la forme d'une parabole mathématique ou a une géométrie combinée composée d'un triangle isocèle aigu (30a) tronqué, confondu sur son bord tronqué (S) avec une géométrie à courbure simple, ladite géométrie à courbure simple étant un segment de cercle (30b¹), un segment d'ellipse (30b²) ou un segment parabolique (30b³)_{.}
